# EUROPEAN PATENT APPLICATION

(11) **EP 3 474 190 A1**
(43) Date of publication of application: **24.04.2019**
(21) Application number: 17196824.1
(22) Date of filing: 17.10.2017
(51) Int. Cl.: G06K 9/62, G06K 9/00

(54) **EMERGENCY SITUATION DETECTION AND AVOIDANCE**

(71) Applicant: Veoneer Sweden AB, 447 83 Vårgårda (SE)
(72) Inventor: Cronwall, Per, 583 32 LINKÖPING (SE); Jagbrant, Gustav, 586 46 Linköping (SE)
(74) Representative: Kransell & Wennborg KB

(57) **Abstract**

There is provided mechanisms for situation classification for a vehicle control system. A method is performed by an electronic control unit. The method comprises performing situation classification to classify a scene captured by at least one camera of an ego vehicle. The situation classification has an online portion and an offline portion. The online portion comprises analyzing at least one entire image frame of the scene as captured by the at least one camera. The online portion is trained by training data generated by the offline portion. The method comprises providing instructions to the vehicle control system. The instructions are based on the situation classification of the scene.

## Description

### TECHNICAL FIELD

Embodiments presented herein relate to a method, an electronic control unit, a computer program, and a computer program product for situation classification for a vehicle control system.

### BACKGROUND

In general terms, a collision avoidance system is an automobile safety system designed to reduce the severity of a collision. It is also known as a pre-crash system, forward collision warning system, or collision mitigating system. The collision avoidance system might use radar, laser (such as Light Detection And Ranging; LIDAR) and/or cameras to detect an imminent crash. Positioning sensors might be configured to detect fixed dangers such as approaching stop signs through a location database.

Once the emergency situation has been detected, the collision avoidance system either provide a warning to the driver when there is an imminent collision or take action autonomously without any driver input (by automatic braking, or automatic steering, or both). Collision avoidance by automatic braking might be most appropriate at low vehicle speeds (e.g. below 50 km/h), while collision avoidance by automatic steering might be most appropriate at higher vehicle speeds.

The emergency situation commonly involves performing object detection in sequences of image frames representing the data captured by the radar, laser, and/or cameras. Traditional automatic brake methods based on object detection and tracking have some limitations. To gain sufficient confidence in both detection quality and motion estimates, it is preferable to track objects causing the potential collision over a multitude of image frames, causing an inherent latency in the decision process. Further, object detectors are sensitive to occlusions, typically only being able to initialize tracks after objects have been almost fully visible in several image frames, thereby introducing additional latency. Traditional bounding box detectors are also prone to yield bad motion estimates for gradually appearing objects. Bounding box detectors are similarly affected by changes in pose, causing inaccurate motion estimates, which can lead to incorrect emergency decisions. Traditional methods also have difficulty utilizing contextual information such as the traffic situation.

Hence, there is still a need for mechanisms enabling improved emergency situation detection and avoidance.

### SUMMARY

An object of embodiments herein is to enable efficient emergency situation detection and avoidance.

According to a first aspect there is presented method for situation classification for a vehicle control system. The method is performed by an electronic control unit. The method comprises performing situation classification to classify a scene captured by at least one camera of an ego vehicle. The situation classification has an online portion and an offline portion. The online portion comprises analyzing at least one entire image frame of the scene as captured by the at least one camera. The online portion is trained by training data generated by the offline portion. The method comprises providing instructions to the vehicle control system. The instructions are based on the situation classification of the scene.

Advantageously the disclosed situation classification enables efficient emergency situation detection and avoidance.

According to a second aspect there is presented an electronic control unit for situation classification for a vehicle control system. The electronic control unit comprises processing circuitry. The processing circuitry is configured to cause the electronic control unit to perform situation classification to classify a scene captured by at least one camera of an ego vehicle. The situation classification has an online portion and an offline portion. The online portion comprises analyzing at least one entire image frame of the scene as captured by the at least one camera. The online portion is trained by training data generated by the offline portion. The processing circuitry is configured to cause the electronic control unit to provide instructions to the vehicle control system. The instructions are based on the situation classification of the scene.

According to a third aspect there is presented an electronic control unit for situation classification for a vehicle control system. The electronic control unit comprises a situation classifier module (210a) configured to perform situation classification to classify a scene captured by at least one camera of an ego vehicle. The situation classification has an online portion and an offline portion. The online portion comprises analyzing at least one entire image frame of the scene as captured by the at least one camera. The online portion is trained by training data generated by the offline portion. The electronic control unit comprises a provide module configured to provide instructions to the vehicle control system. The instructions are based on the situation classification of the scene.

According to a fourth aspect there is presented a computer program for situation classification for a vehicle control system, the computer program comprising computer program code which, when run on an electronic control unit, causes the electronic control unit to perform a method according to the first aspect.

According to a fifth aspect there is presented a computer program product comprising a computer program according to the fourth aspect and a computer readable storage medium on which the computer program is stored. The computer readable storage medium could be a non-transitory computer readable storage medium.

It is to be noted that any feature of the first, second, third, fourth, and fifth aspects maybe applied to any other aspect, wherever appropriate. Likewise, any advantage of the first aspect may equally apply to the second, third, fourth, and/or fifth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating an ego vehicle according to embodiments;
Fig. 2 schematically illustrates a scene captured by at least one camera of the ego vehicle according to an embodiment;
Fig. 3 is a flowchart of methods according to embodiments;
Fig. 4 schematically illustrates an online portion and an offline portion of a situation classifier according to an embodiment;
Fig. 5 schematically illustrates an emergency situation data generator according to an embodiment;
Fig. 6 is a schematic diagram showing functional units of an electronic control unit according to an embodiment;
Figs. 7 and 8 are schematic diagrams showing functional modules of an electronic control unit according to embodiments; and
Fig. 9 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

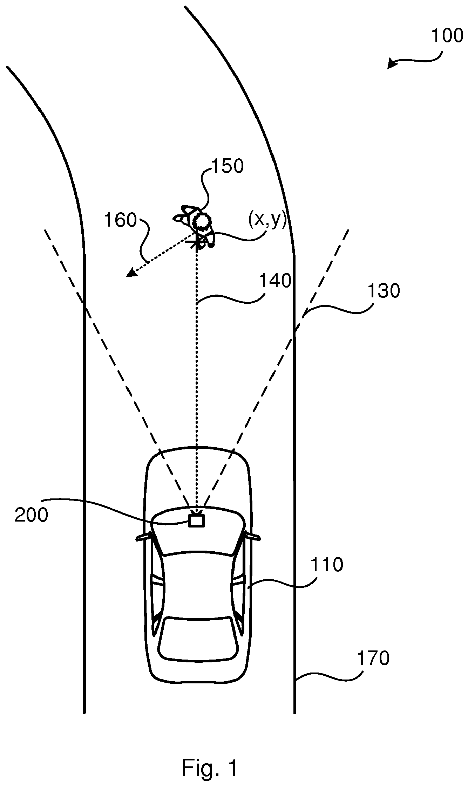

Fig. 1 is a schematic diagram 100 illustrating a top view of an ego vehicle 110 and an object 150. The ego vehicle 110 is travelling along a path 170.

The ego vehicle 110 comprises an electronic control unit 200. The electronic control unit 200 comprises, is co-located with, or is operatively connected to, an on-board sensor. The on-board sensor is configured to capture sensor data within a sensing range 130. Examples of on-board sensors include, but are not limited to, radar, laser (such as a LIDAR sensor) and/or one or more cameras. Each such camera might be a stereo camera or a mono camera, and be capable of capturing color-scale images or gray-scale images. The on-board sensor is assumed to be able to capture multiple readings of the sensor data, such as multiple image frames, per second. Preferably, but not necessarily, the on-board sensor comprises at least a stereo camera, or at least two mono cameras.

The object 150 is assumed to be located at a position (x, y) at a distance 140 from the on-board sensor. The object 150 could stationary or be travelling, as exemplified by trajectory 160.

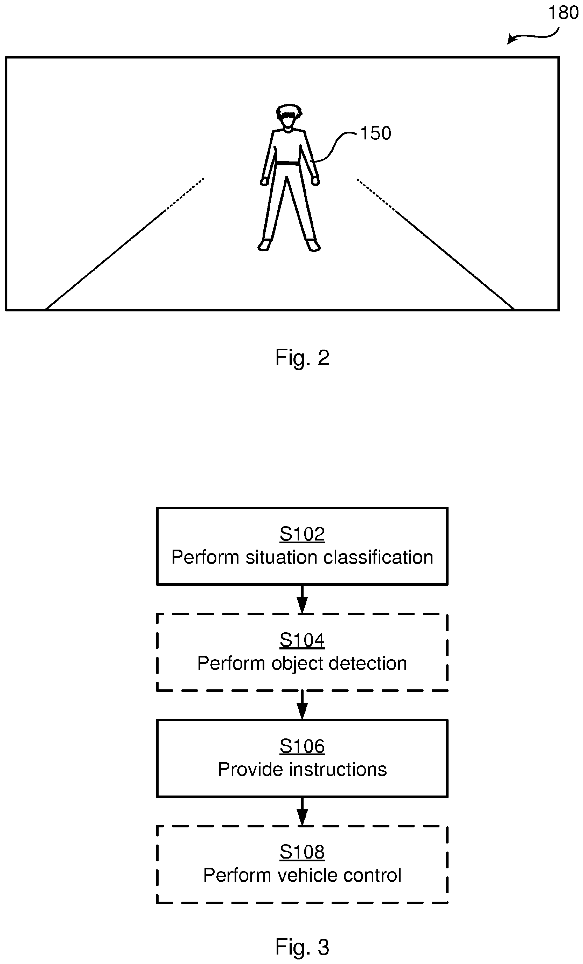

Fig. 2 is a schematic diagram of a scene 180 captured by at least one camera (as exemplifying the on-board sensor) of the ego vehicle 110, where the scene comprises the object 150.

It could be that presence of the object 150 within the path 170 of the ego vehicle 110 could cause an emergency situation to occur.

The embodiments disclosed herein therefore relate to mechanisms for situation classification for a vehicle control system. In order to obtain such mechanisms there is provided an electronic control unit 200, a method performed by the electronic control unit 200, a computer program product comprising code, for example in the form of a computer program, that when run on an electronic control unit 200, causes the electronic control unit 200 to perform the method.

Reference is now made to Fig. 3 illustrating a method for situation classification for a vehicle control system as performed by the electronic control unit 200 according to an embodiment.

The electronic control unit 200 is configured to perform step S102:
S102: The electronic control unit 200 performs situation classification to classify a scene 180 captured by at least one camera of the ego vehicle 110. The situation classification has an online portion and an offline portion. The online portion comprises analyzing at least one entire image frame of the scene 180 as captured by the at least one camera. The online portion is trained by training data generated by the offline portion.

Instructions to a vehicle control system are then provided depending on the outcome of the situation classification. Particularly, the electronic control unit 200 is configured to perform step S106:
S106: The electronic control unit 200 provides instructions to the vehicle control system. The instructions are based on the situation classification of the scene 180.

Hence, there is provided mechanisms for emergency situation classification where situation classification comprises analyzing one or more entire image frames, optionally together with further information, and where a result of the situation classification is used to determine suitable emergency actions for the ego vehicle 110 to be performed by the vehicle control system of the ego vehicle 110.

Embodiments relating to further details of situation classification for a vehicle control system as performed by the electronic control unit 200 will now be disclosed.

Aspects of the online portion will now be disclosed.

In some aspects the online portion is configured to output a probability value of a need to perform an emergency action, such as to engage emergency braking. Particularly, according to an embodiment the online portion comprises determining a probability measure value for engaging an emergency action in the vehicle control system. The instructions provided in step S106 are then based on the probability measure value. One example of an emergency action is Automatic Emergency Braking (AEB).

In some aspects the online portion is configured to use vehicle state information. Particularly, according to an embodiment the online portion comprises analyzing vehicle state information in combination with the at least one entire image frame so as to classify the scene 180. Hence in some aspects the so-called further information mentioned above could comprise vehicle state information. The term "vehicle state information" is used herein to generally refer to traveling states or behaviors of the vehicle and conditions of various parts of the vehicle as on-vehicle devices. Examples of vehicle state information include, but are not limited to, vehicle diagnostic information, navigation information, and consumables replacement information.

There could be different ways to analyze the at least one entire image frame. Particularly, according to an embodiment the online portion comprises analysing the at least one entire image using machine learning model. The machine learning model is trained by the offline portion. For example, the machine learning might be implemented using a neural network. In general terms, the model might be, or be implemented using, a neural network, such as a deep convolutional neural network or other kind of neural network, or other kind of machine learning trained model.

In some aspects the situation classification is combined with object detection. The object detection needs necessarily not be performed for image content of the whole at least one entire image frame, but only in a part of the content. Particularly, according to an embodiment the electronic control unit 200 is configured to perform (optional) step S104:
S104: The electronic control unit 200 performs object detection in at least part of the at least one entire image frame. The instructions provided to the vehicle control system in step S106 are then further based on the object detection.

Thereby the output of the situation classification might be combined with the output of the object detection in order to determine the instructions to be provided to the vehicle control system in step S106.

In some aspects the situation classification and the object detection run in parallel. Particularly, according to an embodiment the object detection is performed in parallel with the situation classification.

In some aspects the situation classification is short term and the object detection is long term. Particularly, according to an embodiment a larger number of image frames is used by the object detection (as in step S104) than by the situation classification (as in step S102). Situations where long term information may be beneficial includes tracking an object over many image frames, obtaining a very good estimate of its motion. In contrast, short term information may prove superior when a fast moving object suddenly appears from behind an obstruction, being only slightly visible at the point in time where an emergency action, such as whether to engage AEB, is needed.

Aspects of the offline portion will now be disclosed.

In some aspects the offline portion is configured to generate emergency situations for training the online portion. Particularly, according to an embodiment the training data comprises sensor data and emergency situation data generated at least from the sensor data.

In some aspects the emergency situations are generated through various forms of real data modification or synthetic data generation. Particularly, according to an embodiment the emergency situation data is generated at least from modified recordings of sensor data, and/or synthetically generated sensor data. This enables training data to be generated without using recordings of actual emergency situations. That is, in some aspects the online portion is trained using modified recordings of sensor data, and/or synthetically generated sensor data representing realistic emergency situations

In some aspects the offline portion is configured to generate ground truth situation analysis. Particularly, according to an embodiment the training data further comprises ground truth situation analysis data of the emergency situation data. The offline portion might utilize an entity configured to generate sensor data and ground truth decisions from recorded data which is used as training data to train the online portion. As will be further disclosed below, the entity might be an emergency situation data generator 510.

In some aspects the offline portion is configured to determine at which ego velocity range an emergency situation would occur. Particularly, according to an embodiment the offline portion comprises determining an ego velocity range for which the emergency situation data is valid.

The modification of the sensor data might then involve changing the velocity in the vehicle state information to a value within or outside the ego velocity range and leave the image content of the corresponding image frame(s) unaltered. Then, in the ground truth situation analysis data, velocity values inside the ego velocity range are considered to represent emergency situations.

The modification of the sensor data might alternatively involve changing the velocity in the vehicle state information to a value within or outside the ego velocity range whilst modifying the image content of the corresponding image frame(s) so as to correspond to this velocity. Then, in the ground truth situation analysis data, ego velocity values inside the velocity range are considered to represent emergency situations.

In some aspects, properties such as depth information, position and movement of annotated objects, and vehicle state information are used to determine the ego velocity range. Particularly, according to an embodiment the ego velocity range is determined based on the sensor data.

In some aspects the vehicle state information is updated in accordance with a desired velocity. Particularly, according to an embodiment the training data comprises vehicle state information. The vehicle state information is then modified in accordance with the ego velocity range before being analysed by the offline portion.

In some aspects the offline portion is configured to provide a predicted time to impact, as well as a predicted trajectory 160 of an object 150. Particularly, according to an embodiment the emergency situation data pertains to impact of the ego vehicle 110 with an imagined object. The offline portion then comprises predicting a time to impact with the imagined object and a trajectory of the imagined object. The ego velocity range is then dependent on the time to impact and the trajectory.

Aspects of the vehicle control will now be disclosed.

In some aspects the instructions provided in step S106 causes actual vehicle control to be performed. Particularly, according to an embodiment the electronic control unit 200 is configured to perform (optional) step S108:
S108: The electronic control unit 200 performs vehicle control using the at least one vehicle control system and in accordance with the instructions. For example, as disclosed above, in some aspects the online portion is configured to output a probability value of a need to perform an emergency action, such as engaging AEB in the vehicle control system and thus the vehicle control in some aspects pertains to engaging AEB in the vehicle control system. The vehicle control could further pertain to engaging Adaptive Cruise Control (ACC), and/or Autonomous Driving (AD). Thereby, the ego vehicle 110 might be instructed to steer and/ or change velocity to alleviate the emergency or avoid it entirely. Yet further, a warning indication based on the situation classification of the scene 180 could be provided to a user interface of the ego vehicle 110. Thereby, acoustic or visual signals might be used to alert the driver of the ego vehicle 110 or even to other road users.

Further aspects, examples, and details of the situation classification for a vehicle control system as performed by the electronic control unit 200 will now be disclosed.

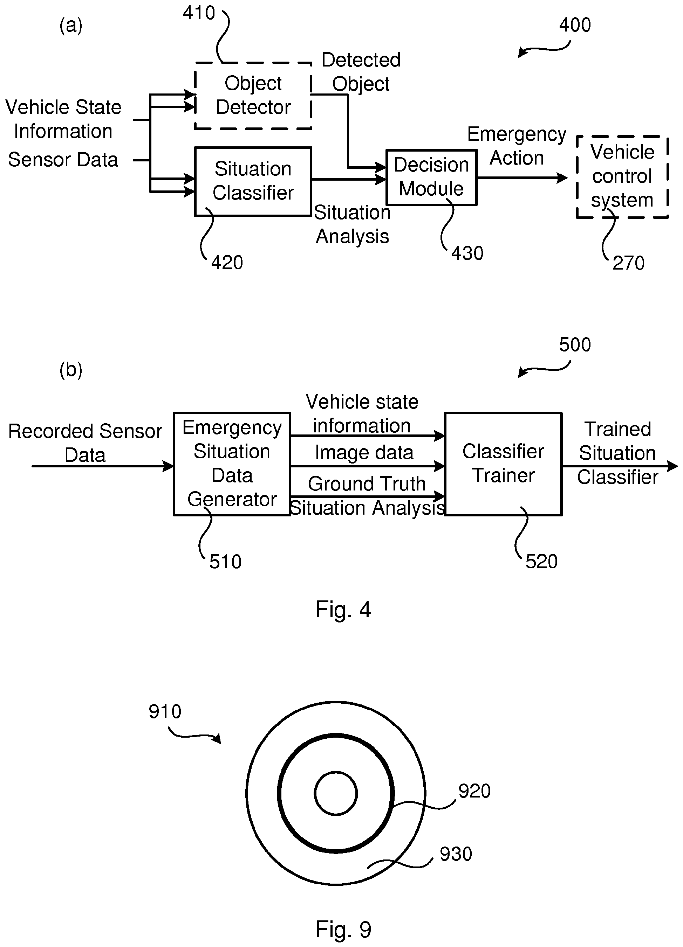

Fig. 4(a) schematically illustrates an online portion 400 of a situation classifier according to an embodiment.

At least one image frame, such as the current image frame and the most-previous image frame, and sensor data (such as ego motion vehicle information data) are provided to a neural network in a situation classifier 420. In some aspects, only sensor data from the current image frame is used. This greatly simplifies the generation of training data, however at the cost of lower performance. In some aspects, sensor data from more than two image frames is used. This might increase performance but might also increase both the system latency and the complexity of generating training data. The situation classifier 420 is configured to observe and analyze high dimensional sensor inputs, such as entire image frames or sequences of image frames, possibly combined with vehicle state information, and to provide a situation analysis based on a holistic view of all information available to the situation classifier 420. The situation classifier 420 is configured to output a probability of there being a need to perform an emergency action. In addition to providing a probability of there being a need to perform an emergency action, the situation classifier 420 could be configured to provide a predicted time to impact as well as a predicted trajectory of an emergency related object 150.

An optional traditional object detector 410 might be run in parallel with the situation classifier 420, configured to yield tracked objects with associated detection confidences, positions, and motion estimates.

A decision module 430 is configured to combine the situation analysis provided by the situation classifier 420 with the detected objects provided by the object detector 420, providing instructions to a vehicle control system 270 when needed. The decision module 430 might therefore be configured to combine the short term holistic situation analysis of the situation classifier 420 with the long term information of the object detector 420 to determine a proper emergency action.

The vehicle control system 270 is configured to perform emergency actions according to instructions provided by the decision module 430. Examples of such emergency actions have been disclosed above.

Fig. 4(b) schematically illustrates an offline portion 500 of a situation classifier according to an embodiment.

In general terms, the situation classifier 420 of Fig. 4(a) is configured to be trained offline using machine learning techniques, utilizing an emergency situation data generator 510. The emergency situation data generator 510 is configured to provide training sensor data and, optionally, vehicle state information, together with the ground truth situation analysis of generated emergency situations. This is made possible by generating ground truth emergency situations through various forms of real data modification or synthetic data generation.

In further detail, information such as traffic accident statistics and scenarios from recorded video sequences might be used to generate realistic emergency scenarios.

The emergency situation data generator 510 might have multiple modes of operation to provide data consistent with emergency scenarios.

In some aspects the emergency situation data generator 510 utilizes real data. For example, real video sequences with associated vehicle state information of real world emergency situations, manually annotated with the proper emergency actions, could then define the output from the emergency situation data generator 510.

In some aspects the emergency situation data generator 510 utilizes modified real data. Several approaches exist for generating emergency situations using modified real data. For example, real video sequences might be modified to define the output from the data generator. Temporal sub-sampling and interpolation could be used to simulate vehicle motion consistent with emergency situations. For example, a three-dimensional model might be generated from the image data using image and depth data. Emergency scenarios could then be constructed by placing a virtual camera in the generated model. For example, objects might be extracted from one sequence of image frames and placed into another to simulate an emergency scenario.

In some aspects the emergency situation data generator 510 utilizes semi-synthetic data. At least two approaches exist for generating emergency situations using semi-synthetic real data. For example, real background video sequences and vehicle state information might be combined with synthetically rendered objects. For example, synthetic background video sequences and vehicle state information might be combined with real objects extracted from real sequences of image frames.

In some aspects the emergency situation data generator 510 utilizes purely synthetic data. Thereby, entirely synthetic video sequences and vehicle data define the output from the emergency situation data generator 510.

In the case the data is modified or that synthetic data is used, generative adversarial networks (GANs) or similar techniques might be used to adjust the modified or synthetic parts of the data to match real world data characteristics.

The actual training of the situation classifier 420 is performed by a classifier trainer 520. The classifier trainer 520 might comprise a neural network, such as a deep convolutional neural network, and implements a training algorithm.

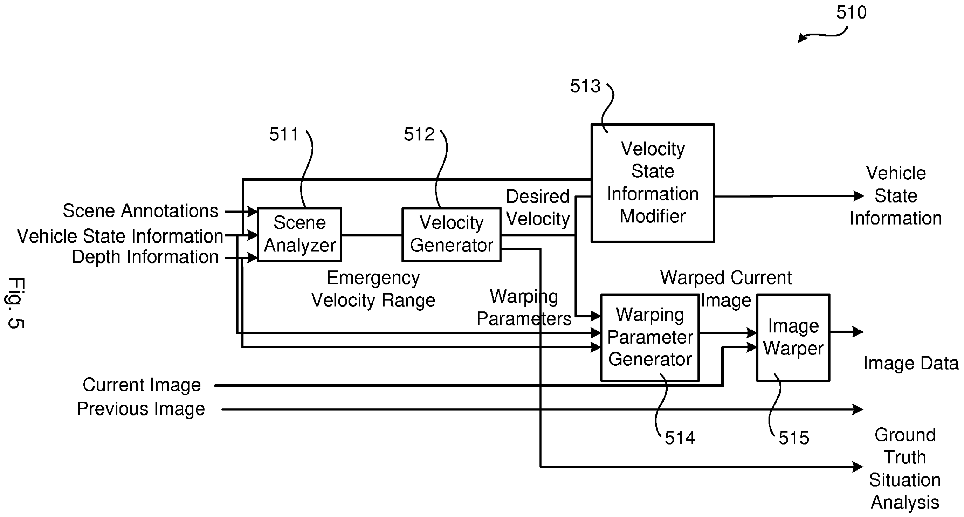

Further details of the emergency situation data generator 510 and how the classifier trainer 520 is configured will now be disclosed with reference to Fig. 5. Fig. 5 schematically illustrates an emergency situation data generator 510 according to an embodiment.

The emergency situation data generator 510 is configured to construct video sequences and associated vehicle state information and ground truth emergency actions. To generate samples for the emergency classifier training, vehicle state information, scene annotations and depth information from a stereo camera or LIDAR sensor, for each of the at least one image frame, might be fed to a scene analyzer 511.

The scene analyzer 511 is configured to use the depth information, position and movement of annotated objects, and vehicle state information, to determine at which ego velocity range an emergency situation would occur. Instead of using annotated objects, an object detector, such as object detector 410, might provide the ground truth object positions. To achieve this for images where the object is heavily occluded, the object detector might run in an anti-causal manner to predict where the object is located when occluded.

The emergency velocity range is fed to the velocity generator 512. To generate positive samples, a desired velocity within the emergency velocity range is selected. To generate negative samples, a velocity outside the range is selected. By using modified samples for both negatives and positives, it is ensured that potential modification artifacts cannot be detected by the situation classifier 420. The ground truth situation analysis is constituted by the class of the sample, i.e. positive or negative.

A vehicle state information modifier 513 is configured to update the vehicle state information in accordance with the desired velocity.

A warping parameter generator 514 is configured to determine how the image content of the current image frame should be warped to be consistent with the desired velocity. An increased velocity, for example, corresponds to a simulated forward motion of the camera, which can be achieved by warping the image content utilizing the depth information.

An image warper 515 is configured to perform the warping and to output the modified image content of the current image frame. The previous image frame is output without alterations.

The functionality of the warping parameter generator 514 and the image warper 515 might be implemented by a convolutional neural network.

The neural network of the classifier trainer 520 is optimized to separate the positive and negative samples based on the image content and vehicle state information.

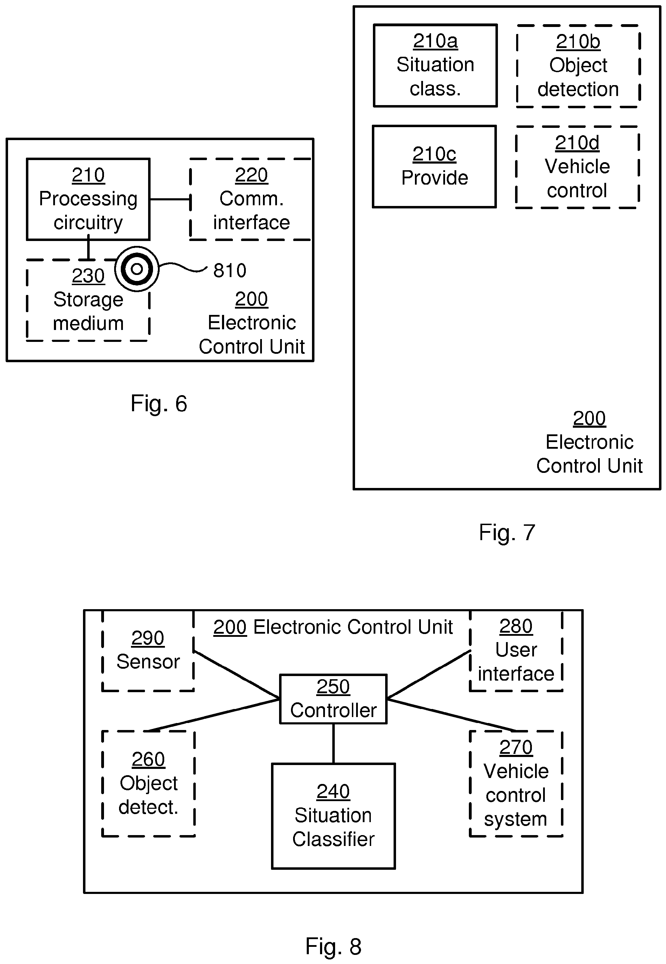

Fig. 6 schematically illustrates, in terms of a number of functional units, the components of an electronic control unit 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 910 (as in Fig. 9), e.g. in the form of a storage medium 230. The processing circuitry 210 may further be provided as at least one application specific integrated circuit (ASIC), or field programmable gate array (FPGA).

Particularly, the processing circuitry 210 is configured to cause the electronic control unit 200 to perform a set of operations, or steps, S102-S108, as disclosed above. For example, the storage medium 230 may store the set of operations, and the processing circuitry 210 may be configured to retrieve the set of operations from the storage medium 230 to cause the electronic control unit 200 to perform the set of operations. The set of operations maybe provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The electronic control unit 200 may further comprise a communications interface 220 at least configured for communications with other entities, devices, functions, and nodes to which the electronic control unit 200 is operatively connected. As such the communications interface 220 may comprise one or more transmitters and receivers, comprising analogue and digital components. The processing circuitry 210 controls the general operation of the electronic control unit 200 e.g. by sending data and control signals to the communications interface 220 and the storage medium 230, by receiving data and reports from the communications interface 220, and by retrieving data and instructions from the storage medium 230. Other components, as well as the related functionality, of the electronic control unit 200 are omitted in order not to obscure the concepts presented herein.

Fig. 7 schematically illustrates, in terms of a number of functional modules, the components of an electronic control unit 200 according to an embodiment. The electronic control unit 200 of Fig. 7 comprises a number of functional modules; a situation classifier module 210a configured to perform step S102, and a provide module 210c configured to perform step S106. The electronic control unit 200 of Fig. 7 may further comprise a number of optional functional modules, such as any of an object detection module 210b configured to perform step S104 and a vehicle control module 210d configured to perform step S108. In general terms, each functional module 210a-210d may in one embodiment be implemented only in hardware and in another embodiment with the help of software, i.e., the latter embodiment having computer program instructions stored on the storage medium 230 which when run on the processing circuitry makes the electronic control unit 200 perform the corresponding steps mentioned above in conjunction with Fig 7. It should also be mentioned that even though the modules correspond to parts of a computer program, they do not need to be separate modules therein, but the way in which they are implemented in software is dependent on the programming language used. Preferably, one or more or all functional modules 210a-210d may be implemented by the processing circuitry 210, possibly in cooperation with the communications interface 220 and/or the storage medium 230. The processing circuitry 210 may thus be configured to from the storage medium 230 fetch instructions as provided by a functional module 210a-210d and to execute these instructions, thereby performing any steps as disclosed herein.

Fig. 8 schematically illustrates, in terms of a number of functional modules, the components of an electronic control unit 200 according to an embodiment.

The electronic control unit 200 of Fig. 8 comprises a situation classifier 240. The situation classifier 240 is configured for performing situation classification. The situation classifier 240 implements at least the functionality of the online portion 400 and is further configured to obtain training data generated by the offline portion 500 to enable the online portion 400 to be trained by the offline portion 500. In this respect the situation classifier 240 may implement functionality of the situation classifier module 210a, and hence be configured to perform step S102.

The electronic control unit 200 of Fig. 8 optionally comprises an on-board sensor 290. Alternatively, the on-board sensor 290 could be operatively connected to the electronic control unit 200. The on-board sensor 290 is configured to sense data, or in other words, to capture senor data, and to provide the sensed data as input to a controller 250. Examples of different types of on-board sensors 290 have been provided above.

The electronic control unit 200 of Fig. 8 optionally comprises an object detector 260 configured to perform object detection in a scene 180 captured by the on-board sensor 290. In this respect the object detector 260 may implement functionality of the objection detection module 210b, and hence be configured to perform step 104.

The electronic control unit 200 of Fig. 8 comprises a controller 250 configured to obtain the sensor data from the on-board sensor 290, to provide the sensor data to the situation classifier 240 and, optionally, to the object detector 260, to receive a situation classification of the scene 180 from the situation classifier 240 and, optionally, provide a result of the object detection performed by the object detector 260 to the situation classifier 240. The controller 250 is further configured to determine, based on the situation classification of the scene 180 and, optionally, based on the result of the object detection performed by the object detector 260, the instructions to be provided the vehicle control system 270, and to provide these instructions to the vehicle control system 270. In this respect the controller 250 may implement functionality of the provide module 210c, and hence be configured to perform step S106.

The electronic control unit 200 of Fig. 8 optionally comprises a vehicle control system 270. Alternatively, the vehicle control system 270 could be operatively connected to the electronic control unit 200. The vehicle control system 270 is configured to perform vehicle control in accordance with the instructions provided by a controller 250. The vehicle control system 260 is thus configured to implement functionality of the vehicle control module 210c by performing ACC, AEB, and/ or AD and hence be configured to perform step S108.

The electronic control unit 200 of Fig. 8 optionally comprises a user interface 280. Alternatively, the user interface 280 could be operatively connected to the electronic control unit 200. The controller 250 might then be configured to provide a warning indication to the user interface 280 in conjunction with providing the instructions to the vehicle control system 270 based on the situation classification of the scene 180.

The electronic control unit 200 might be provided as a standalone device or as a part of at least one further device. For example, although the electronic control unit 200 in Fig. 8 has been illustrated as (optionally) comprising a vehicle control system 270, the electronic control unit 200 may be provided as part of the vehicle control system 270 or as part of the situation classifier 240. The same applies to the functional modules 210a-210d of Fig. 7 and the computer program 920 of Fig. 9 (see below).

Further, the electronic control unit 200 can be part of an automotive vehicle, as defined by the ego vehicle 110. Hence, according to an embodiment there is provided a vehicle 110 comprising the electronic control unit 200.

Fig. 9 shows one example of a computer program product 910 comprising computer readable storage medium 930. On this computer readable storage medium 930, a computer program 920 can be stored, which computer program 920 can cause the processing circuitry 210 and thereto operatively coupled entities and devices, such as the communications interface 220 and the storage medium 230, to execute methods according to embodiments described herein. The computer program 920 and/or computer program product 910 may thus provide means for performing any steps as herein disclosed.

In the example of Fig. 9, the computer program product 910 is illustrated as an optical disc, such as a CD (compact disc) or a DVD (digital versatile disc) or a Blu-Ray disc. The computer program product 910 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 920 is here schematically shown as a track on the depicted optical disk, the computer program 920 can be stored in any way which is suitable for the computer program product 910.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for situation classification for a vehicle control system (270), the method being performed by an electronic control unit (200), the method comprising:
performing (S102) situation classification to classify a scene (180) captured by at least one camera of an ego vehicle (110), the situation classification having an online portion and an offline portion,
wherein the online portion comprises analyzing at least one entire image frame of the scene (180) as captured by the at least one camera, and
wherein the online portion is trained by training data generated by the offline portion; and
providing (S106) instructions to the vehicle control system (270),
wherein the instructions are based on the situation classification of the scene (180).

2. The method according to claim 1, wherein the online portion comprises determining a probability measure value for engaging an emergency action in the vehicle control system (270), and wherein the instructions are based on the probability measure value.

3. The method according to claim 1 or 2, wherein the online portion comprises analyzing vehicle state information in combination with the at least one entire image frame to classify the scene (180).

4. The method according to any of the preceding claims, wherein the online portion comprises analysing the at least one entire image using a machine learning model trained by the offline portion.

5. The method according to any of the preceding claims, further comprising:
performing (S104) object detection in at least part of the at least one entire image frame, and wherein the instructions further are based on the object detection.

6. The method according to claim 5, wherein a larger number of image frames is used by the object detection than by the situation classification.

7. The method according to any of the preceding claims, wherein the training data comprises sensor data and emergency situation data generated at least from the sensor data as well as ground truth situation analysis data of the emergency situation data, and wherein the emergency situation data is generated at least from at least one of: modified recordings of sensor data, and synthetically generated sensor data.

8. The method according to claim 7, wherein the offline portion comprises determining an ego velocity range for which there is an emergency situation.

9. The method according to claims 7 and 8, wherein the ego velocity range is determined based on the sensor data.

10. The method according to claim 9, wherein the training data comprises vehicle state information, and wherein the vehicle state information is modified in accordance with the ego velocity range before being analyzed by the offline portion.

11. The method according to claim 8, wherein
the sensor data is modified by changing velocity in the vehicle state information to a value within or outside the ego velocity range and leaving image content of the at least one image frame unaltered, and wherein, in the ground truth situation analysis data, velocity values inside the ego velocity range are considered to represent emergency situations, and/or wherein
the sensor data is modified by changing velocity in the vehicle state information to a value within or outside the ego velocity range and modifying image content of the at least one image frame so as to correspond to this velocity, and wherein in the ground truth situation analysis data, velocity values inside the ego velocity range are considered to represent emergency situations.

12. The method according to any of the preceding claims, further comprising:
performing (S108) vehicle control using the at least one vehicle control system (270) and in accordance with the instructions.

13. An electronic control unit (200) for situation classification for a vehicle control system (270), the electronic control unit (200) comprising processing circuitry (210), the processing circuitry being configured to cause the electronic control unit (200) to:
perform situation classification to classify a scene (180) captured by at least one camera of an ego vehicle (110), the situation classification having an online portion and an offline portion,
wherein the online portion comprises analyzing at least one entire image frame of the scene (180) as captured by the at least one camera, and
wherein the online portion is trained by training data generated by the offline portion; and
provide instructions to the vehicle control system (270), wherein the instructions are based on the situation classification of the scene (180).

14. An electronic control unit (200) for situation classification for a vehicle control system (270), the electronic control unit (200) comprising:
a situation classifier module (210a) configured to perform situation classification to classify a scene (180) captured by at least one camera of an ego vehicle (110), the situation classification having an online portion and an offline portion,
wherein the online portion comprises analyzing at least one entire image frame of the scene (180) as captured by the at least one camera, and
wherein the online portion is trained by training data generated by the offline portion; and
a provide module (210c) configured to provide instructions to the vehicle control system (270), wherein the instructions are based on the situation classification of the scene (180).

15. A computer program (920) for situation classification for a vehicle control system (270), the computer program comprising computer code which, when run on processing circuitry (210) of an electronic control unit (200), causes the electronic control unit (200) to:
perform (S102) situation classification to classify a scene (180) captured by at least one camera of an ego vehicle (110), the situation classification having an online portion and an offline portion,
wherein the online portion comprises analyzing at least one entire image frame of the scene (180) as captured by the at least one camera, and
wherein the online portion is trained by training data generated by the offline portion; and
provide (S106) instructions to the vehicle control system (270), wherein the instructions are based on the situation classification of the scene (180).
